# EUROPEAN PATENT APPLICATION

(11) **EP 4 671 551 A1**
(43) Date of publication of application: **31.12.2025**
(21) Application number: 25184855.2
(22) Date of filing: 24.06.2025
(51) Int. Cl.: F16B 43/00, B64D 45/02

(54) **FLOATING SEAL WASHERS, FASTENER ASSEMBLIES AND METHODS FOR PROTECTION FROM ELECTROMAGNETIC EFFECTS**

(30) Priority: 26.06.2024 US 202418754413
(71) Applicant: The Boeing Company, Arlington, VA 22202 (US)
(72) Inventor: Albrecht, Mark E., Arlington 22202 (US); Chan, Kwok Tung, Arlington 22202 (US); Bickford, Jeffry G., Arlington 22202 (US); Ly, Tuan T., Arlington 22202 (US)
(74) Representative: Arnold & Siedsma

(57) **Abstract**

A floating seal washer for protection from electromagnetic effects includes a washer and a seal. The washer has an annular shape that includes a central opening. The annular shape defines a height, an inside diameter and an outside diameter along a longitudinal axis. The seal has a circular shape that includes a central aperture. The circular shape defines an elevation, an inner surface and an outer surface along the longitudinal axis. The seal being set into the inside diameter of the washer. A fastener assembly for protection from electromagnetic effects includes a bolt, a floating seal washer and a nut. The seal and the washer float relative to each other as the nut is tightened on the bolt. Methods for protection from electromagnetic effects in conjunction with use of the fastener assembly and the floating seal washer are also provided.

## Description

### FIELD

The present disclosure relates generally to floating seal washers and, particularly, to fastener assemblies that include the floating seal washer and methods for installing the fastener assemblies to join workpieces. The various methods use seals in the floating seal washers as barriers that provide protection from electromagnetic effects such as lightning strikes.

### BACKGROUND

It is unacceptable for a washer to contact a bolt feature and for a bolt feature to contact a nut, particularly, in an aircraft as this has shown to result in sparks during lightning strike testing. Previous seal washer designs to address this problem were asymmetrical in shape. However, the asymmetrical design failed to meet needs for production and in-service inspections. If installed in an incorrect orientation, the seal washer does not provide the correct contact with bolt, which could lead to damage in the event of a lightning strike. Additionally, previous techniques for protection from electromagnetic effects in relation to fastener assemblies, cap seals are currently implemented over the nuts of such assemblies. For example, for tapered sleeve bolts, cap seals are currently applied. Cap seals are heavy, take a long time to install, and are typically in confined space areas (fuel tank). This results in higher costs for flying the additional weight, additional flow time for installation, and potential long-term injury to personnel from more confined space work.

Accordingly, those skilled in the art continue with research and development efforts to improve seal washers and techniques for protection from electromagnetic effects relating to fastener assemblies.

### SUMMARY

Disclosed are examples of floating seal washers, fastener assemblies and methods for protection from electromagnetic effects. The following is a non-exhaustive list of examples, which may or may not be claimed, of the subject matter according to the present disclosure.

In a first example, a floating seal washer for protection from electromagnetic effects includes a washer and a seal. The washer has an annular shape that includes a central opening. The annular shape defines an inside diameter, and preferably a height and an outside diameter, along a longitudinal axis. The seal preferably has a circular shape that includes a central aperture. The circular shape may define an elevation, an inner surface and an outer surface along the longitudinal axis. The seal being set into the inside diameter of the washer. The seal and the washer float relative to each other.

The electromagnetic effects may comprise effects from lightning strikes. Both edges of the outer surface of the seal may be chamfered. The seal may be symmetrical in relation to a diameter and the longitudinal axis. The seal may comprise an electromagnetic energy isolating seal.

The seal may comprise an annular groove in the inner surface. The annular groove may be centrally disposed in the inner surface in relation to the longitudinal axis.

The seal may comprise two annular grooves in the inner surface. The two annular grooves may be spaced apart in relation to the longitudinal axis.

The seal may comprise a nonconductive material. The nonconductive material may comprise at least one of a thermoplastic material and a polyether ether ketone material.

The washer may comprise a metallic material. The metallic material may comprise at least one of a corrosion-resistant steel and a stainless steel.

The floating seal washer may further comprise a retention feature to prevent the seal from dislodging from the washer prior to use of the floating seal washer in a fastener assembly. The retention feature may comprise at least one of mating notches in the washer and the seal, one or more mating grooves in the washer and the seal, an interference fit between the washer and the seal, and an adhesive between the washer and the seal.

In a second example, a fastener assembly for protection from electromagnetic effects includes a bolt, a floating seal washer and a nut. The floating seal washer may be according to the first example above. The bolt includes a shank defining a longitudinal axis along its length and having a threaded portion. The bolt is configured to be inserted into bores through at least two workpieces to be joined. The floating seal washer includes a washer and a seal. The washer has an annular shape that includes a central opening. The annular shape defines an inside diameter along the longitudinal axis. The seal being set into the inside diameter of the washer. The floating seal washer configured to be installed on the shank from the threaded portion and slid toward the at least two workpieces. The seal and the washer float relative to each other. The nut has a through hole along the longitudinal axis. The nut includes a first portion defining a cavity formed by internal walls and a second portion with internal threads. The nut configured for threaded engagement with the bolt such that the cavity faces the floating seal washer.

The electromagnetic effects may comprise effects from lightning strikes.

The bolt may comprise a metallic material. The metallic material may comprise at least one of a corrosion-resistant steel, a stainless steel, a nickel alloy and a titanium alloy.

The at least two workpieces may comprise at least one fiber-reinforced composite workpiece.

The bolt may comprise a tapered bolt with a head opposing the threaded portion of the shank, and the shank of the tapered bolt may comprise a tapered portion between the head and the threaded portion. The bores through the at least two workpieces may be sized to receive the threaded portion and the tapered portion of the shank for the tapered bolt. The bores through the at least two workpieces may be configured to provide an interference fit to the tapered portion of the shank for the tapered bolt.

The nut may be configured to compress the floating seal washer between the at least two workpieces and the nut upon further threaded engagement such that the washer is spaced from the shank of the bolt by the seal and such that the seal prevents the shank from contacting the internal walls of the nut that define the cavity. The seal may be configured to provide a barrier to electromagnetic effects between the shank of the bolt and the washer of the floating seal washer after the nut is fully engaged with the threaded portion of the shank. The seal may be configured to provide a barrier to electromagnetic effects between the shank of the bolt and the internal walls of the nut that define the cavity after the nut is fully engaged with the threaded portion of the shank.

The bolt may comprise a head opposing the threaded portion of the shank and a sleeve installed on the shank from the threaded portion and slid toward the head. The bores through the at least two workpieces may be sized to receive the sleeve and the shank of the bolt. The bores through the at least two workpieces may be configured to provide an interference fit to the sleeve. The sleeve may comprise a metallic material. The metallic material may comprise at least one of a stainless steel and a corrosion-resistant steel. The seal of the floating seal washer may be configured to prevent the sleeve of the bolt from contacting the nut after the nut is fully engaged with the threaded portion of the shank. The seal of the floating seal washer may be configured to provide a barrier to electromagnetic effects between the sleeve of the bolt and the nut after the nut is fully engaged with the threaded portion of the shank.

The annular shape of the washer may also define a height and an outside diameter along the longitudinal axis, and the seal may have a circular shape comprising a central aperture, the circular shape may define an elevation, an inner surface and an outer surface along the longitudinal axis. Both edges of the outer surface of the seal in the floating seal washer may be chamfered. The seal of the floating seal washer may comprise an annular groove in the inner surface. The seal of the floating seal washer may comprise two annular grooves in the inner surface.

The seal of the floating seal washer may be symmetrical in relation to a diameter and the longitudinal axis. The seal of the floating seal washer may comprise an electromagnetic energy isolating seal. The seal of the floating seal washer may comprise a nonconductive material. The washer of the floating seal washer may comprise a metallic material.

The nut may comprise a metallic material. The metallic material may comprise at least one of a corrosion-resistant steel and a stainless steel.

The cavity may comprise a counterbore extending from an exterior surface on the first portion of the nut along the longitudinal axis toward the internal threads. The cavity may comprise a countersink extending from the counterbore in the first portion of the nut along the longitudinal axis toward the internal threads.

The cavity may comprise a countersink extending from an exterior surface on the first portion of the nut along the longitudinal axis toward the internal threads. The cavity may comprise a contoured surface extending from an exterior surface on the first portion of the nut along the longitudinal axis toward the internal threads. The cavity may comprise a machined surface extending from an exterior surface on the first portion of the nut along the longitudinal axis toward the internal threads. The nut may comprise a torquing feature for engagement by a torquing tool in conjunction with engagement and tightening of the nut on the threaded portion of the shank.

In a third example, a method for protection from electromagnetic effects includes: (i) inserting a shank of a bolt into bores through at least two workpieces to be joined, the shank defining a longitudinal axis along its length and having a threaded portion, the shank being inserted on a working side of the bores until the threaded portion is at least partially exposed on a more confined-space side of the bores; (ii) installing a floating seal washer, such as the floating seal washer of the first example above, on the threaded portion of the shank exposed on the more confined-space side of the bores, the floating seal washer includes a washer having an annular shape that defines an inside diameter along the longitudinal axis and a seal set into the inside diameter of the washer, wherein the washer and the seal float relative to each other; (iii) engaging internal threads of a nut with a distal end of the threaded portion of the shank, the nut having a through hole along the longitudinal axis, the nut including a first portion defining a cavity formed by internal walls and a second portion with the internal threads; (iv) tightening the nut to further engage the internal threads with the threaded portion of the shank; and (v) applying torque to the nut to fully engage the internal threads with the threaded portion of the shank.

The bolt may comprise a tapered bolt with a head opposing the threaded portion of the shank, the shank of the tapered bolt comprising a tapered portion between the head and the threaded portion.

The bolt may comprise a tapered bolt with a head opposing the threaded portion of the shank, and the shank of the tapered bolt may comprise a tapered portion between the head and the threaded portion. The inserting of the shank may comprise: inserting the tapered portion of the shank into the bores through the at least two workpieces; and pushing the tapered portion of the shank into the bores until the head is proximate the working side of the at least two workpieces.

The bolt may comprise a head opposing the threaded portion of the shank and a sleeve configured for installation on the shank from the threaded portion. The inserting of the shank may comprise: inserting the sleeve of the bolt into the bores through the at least two workpieces; inserting the shank of the bolt into the sleeve; and pushing the bolt and the sleeve into the bores until a proximal end of the sleeve and the head are proximate the working side of the at least two workpieces. The applying of the torque may comprise: compressing the floating seal washer between a closest of the at least two workpieces and the nut such that the seal prevents the sleeve of the bolt from contacting the nut. The compressing of the floating seal washer may comprise: providing a barrier to electromagnetic effects between the sleeve of the bolt and the nut by the seal.

The bolt may comprise a head opposing the threaded portion of the shank and a sleeve configured for installation on the shank from the threaded portion. The inserting of the shank may comprise: inserting the shank of the bolt into the sleeve until the head is proximate a proximal end of the sleeve; inserting the shank and the sleeve into the bores through the at least two workpieces; and pushing the bolt and the sleeve into the bores until the proximal end of the sleeve and the head are proximate the working side of the at least two workpieces.

The seal of the floating seal washer may be symmetrical in relation to a diameter and the longitudinal axis such that either side of the floating seal washer can be facing the more confined-space side of the bores through at least two workpieces in conjunction with the installing of the floating seal washer.

The seal of the floating seal washer may comprise an annular groove in an inner surface to provide flexibility for the seal in conjunction with movement of the washer and the seal relative to each other during the tightening of the nut and the applying of the torque.

The seal of the floating seal washer may comprise two annular grooves in an inner surface to provide flexibility for the seal in conjunction with movement of the washer and the seal relative to each other during the tightening of the nut and the applying of the torque.

The installing of the floating seal washer may comprise: sliding the floating seal washer toward a closest of the at least two workpieces.

The engaging of the internal threads of the nut may comprise: orienting the nut such that the cavity faces the floating seal washer prior to the engaging of the internal threads.

The nut may comprise a torquing feature for engagement by a torquing tool in conjunction with the tightening of the nut and the applying of the torque.

The applying of the torque may comprise: compressing the floating seal washer between a closest of the at least two workpieces and the nut such that the washer is spaced from the shank of the bolt by the seal and such that the seal prevents the shank from contacting the internal walls of the nut that define the cavity. The compressing of the floating seal washer may comprise: providing a barrier to electromagnetic effects between the shank of the bolt and the washer of the floating seal washer by the seal. The compressing of the floating seal washer may comprise: providing a barrier to electromagnetic effects between the shank of the bolt and the internal walls of the nut that define the cavity by the seal.

Other examples of the disclosed floating seal washers, fastener assemblies and methods for protection from electromagnetic effects will become apparent from the following detailed description, the accompanying drawings and the appended claims.

### BRIEF DESCRIPTION OF THE DRAWINGS

Fig. 1A is a side view of an example of a floating seal washer for protection from electromagnetic effects;
Fig. 1B is a top view of a washer in the floating seal washer of Fig. 1A;
Fig. 1C is a top view of a seal in the floating seal washer of Fig. 1A;
Fig. 2 is a perspective view of another example of a floating seal washer for protection from electromagnetic effects;
Fig. 3 is a perspective view of yet another example of a floating seal washer for protection from electromagnetic effects;
Fig. 4A is a detail view of an example of a retention feature of a floating seal washer;
Fig. 4B is a detail view of another example of a retention feature of a floating seal washer;
Fig. 4C is a detail view of yet another example of a retention feature of a floating seal washer;
Fig. 5 is a cross-sectional side view of an example of a fastener assembly for protection from electromagnetic effects;
Fig. 6 is a cross-sectional side view of another example of a fastener assembly for protection from electromagnetic effects;
Fig. 7 is a cross-sectional side view of yet another example of a fastener assembly for protection from electromagnetic effects;
Fig. 8 is a cross-sectional side view of still another example of a fastener assembly for protection from electromagnetic effects;
Fig. 9A is a cross-sectional side view of an example of a nut of a fastener assembly;
Fig. 9B is a cross-sectional side view of another example of a nut of a fastener assembly;
Fig. 9C is a cross-sectional side view of yet another example of a nut of a fastener assembly;
Fig. 9D is a cross-sectional side view of still another example of a nut of a fastener assembly;
Fig. 9E is a cross-sectional side view of still yet another example of a nut of a fastener assembly;
Fig. 10A is a bottom view of the nuts of Figs. 9A-E;
Fig. 10B is a top view of the nuts of Figs. 9A-E;
Fig. 11 is a flow diagram showing an example of a method for protection from electromagnetic effects;
Fig. 12 is a flow diagram showing an example of the inserting of the shank of Fig. 11;
Fig. 13 is a flow diagram showing another example of the inserting of the shank and several examples of the applying of the torque of Fig. 11;
Fig. 14 is a flow diagram showing yet another example of the inserting of the shank of Fig. 11;
Fig. 15 is a flow diagram showing an example of the installing of the floating seal washer of Fig. 11;
Fig. 16 is a flow diagram showing an example of the engaging of the internal threads of Fig. 11;
Fig. 17 is a flow diagram showing several examples of the applying of the torque of Fig. 11;
Fig. 18 is a block diagram of aircraft production and service methodology that implements one or more of the examples of methods for protection from electromagnetic effects disclosed herein; and
Fig. 19 is a schematic illustration of an aircraft that incorporates workpieces that are joined using one or more of the examples of floating seal washers, fastener assemblies and methods for protection from electromagnetic effects disclosed herein.

### DETAILED DESCRIPTION

Various examples of a floating seal washer 100 provide electromagnetic effect protection by providing a barrier seal between a nut 512 and a washer 102 of the floating seal washer 100. The seal 114 and washer 102 float relative to each other. As the nut 512 is torqued down, the seal 114 flows down into a cavity 516 of the nut 512 to prevent the washer 102 from contacting a bolt 502 and to prevent a sleeve 702 of the bolt 502 from contacting the nut 512.

The various examples of the floating seal washer 100 include a seal 114 that is symmetrical. Due to the symmetrical washer 102, the floating seal washer 100 may be installed in either orientation. The symmetrical washer 102 also prevents requirements for cap seals on tapered sleeve bolts and other types of bolts. The design of the floating seal washer 100 allows the seal 114 to contact the cavity 516 of the nut 512 to meet the fit and function requirements of the fastener assembly 500. In addition, the floating seal 114 improves electromagnetic effect protection to provide lightning strike protection and minimize confined space entry work.

In bolt installations, it is unacceptable for the washer to contact bolt features and for bolt features to contact the nut for certain electromagnetic effect conditions. To prevent these electromagnetic effect conditions, the seal 114 of the floating seal washer 100 provides a barrier seal between the washer 102 and the bolt 502. The floating seal 114 is set into the inside diameter 108 of the washer 102 that slides down into the cavity 516 of the nut 512 as torque is applied.

For example, the floating seal washer 100 can be used in fastener assemblies 500 that include a tapered bolt 602 that includes a sleeve 702. In this example, the symmetrical washer 102 prevents the need for cap seals on tapered sleeve bolts. The seal 114 and washer 102 float relative to each other as the nut is torqued down. The seal 114 flows down into the cavity 516 of the nut 512 preventing the washer 102 from contacting the bolt 502 and preventing the sleeve 702 from contacting the nut 512. Eliminating the need for cap seals, for example, reduces the weight of the fastener assemblies 500, workflow to install the fastener assemblies 500 and confined-space entry time during the installations. The time for inspection of the installations and rework is also reduced. Eliminating cap seals, for example, in aircraft reduces weight and increases aircraft performance.

In various examples of the fastener assembly 500, the seal 114 of the floating seal washer 100 must not flow or extrude out between the washer 102 and the workpieces 510 being joined, nor between the washer 102 and nut 512. The seal 114 must be able to slide and flow into the contour of the cavity 516 of the nut 512. The seal 114 is not electrically conductive.

The floating seal 114 is set into the inside diameter 108 of the washer 102 and slides down into the cavity 516 of the nut 512 as torque is applied. The seal 114 may have one or more circumferential grooves 202, 302 that allow it to better bend to a countersink 906 that forms the cavity 516 of the nut 512. In another form, the seal 114 is chamfered 126 at the edges 124 to provide lead in as well thinning of the seal 114 so it better flows around the contours of the cavity 516. The presence of the seal 114 along the inside of the washer 102 prevents the washer 102 from contacting the bolt 502. The seal 114, having flowed along the contour of the cavity 516, forms a barrier that prevents a bolt feature from contacting the nut 512 providing electrical isolation. In another form, to prevent the seal 114 from dislodging during handling, the seal 114 and washer 102 may have a retention feature 400, 404, 408 such as mating notches 402 or one or more mating grooves 406. In another form, the seal 114 of the floating seal washer 100 and the metal washer 102 may be held in place through interference fit or an adhesive 410.

The floating seal washer 100 is symmetrical in orientation to simplify fabrication and installation, but after installation, the seal 114 of the floating seal washer 100 flows into an asymmetrical cavity 516 to meet form fit and function of the fastening assembly 500. The floating seal 114 slides into position as torque is applied to the nut 512. The inside groove 202 in the seal 114 is for better bendability to fit the contour of the cavity 516. The chamfer 126 at the edges 124 of the seal 114 provide a tapered lead in for better seal and material flow along with the bendability to fit the cavity 516. The flowing of the seal 114 along the contour of the cavity 516 isolates the metal bolt 502 feature from the nut 512. The inside diameter 108 of the metal washer 102 and the outer surface 122 of the seal 114 have a retention feature 400, 404, 408 to hold the floating seal washer 100 together during handling prior to installation.

Various examples of a method 1100 for protection from electromagnetic effects include placing a bolt 502 in a bore 508 and placing a floating seal washer 100 on the threaded side of the bolt 502. The floating seal washer 100 is symmetric with the seal 114 sticking out both sides of the washer 102. Next, the nut 512 is threaded onto the bolt 502. As the nut 512 begins to tighten, the seal 114 of the floating seal washer 100 slides into the cavity 516 of the nut 512. As the nut 512 continues to tighten against the metal washer 102 of the floating seal washer 100, the seal 114 presses against the workpieces 510, and the metal washer 102 begins to slide along the seal 114. As the metal washer 102 slides along the seal 114 and the nut 512 continues to tighten, the seal 114 flows along the walls of the cavity 516 conforming to its contour. When final torque is reached on the nut 512, the metal washer 102 of the floating seal washer 100 is pressed between the nut 512 and workpieces 510, the seal 114 extends from the workpieces 510 into the cavity 516 of the nut 512 and between the washer 102 and the bolt 502. Upon final installation, the seal 114 keeps the metal washer 102 of the floating seal washer 100 centered around the bolt 502 and prevents certain bolt features from improperly contacting the walls that form the cavity 516 of the nut 512.

In another example of the method 1100 for protection from electromagnetic effects, a bolt 502 is placed in bore 508 in an aircraft structure which requires electromagnetic effect protection. The floating seal washer 100 is placed on a threaded portion 506 of the bolt 502 and the nut 512 is finger tightened onto the threaded portion 506. The nut 512 is tightened down with a wrench. As the nut 512 begins to tighten, the seal 114 of the floating seal washer 100 slides into the cavity 516 of the nut 512. As the nut 512 continues to tighten against the metal washer 102 of the floating seal washer 100, the seal 114 presses against the aircraft structure and the metal washer 102 begins to slide along the seal 114. As the metal washer 102 slides along the seal 114 and the nut 512 continues to tighten further, the seal 114 flows along the walls of the cavity 516 of the nut 512 conforming to its contour. When the final torque is reached on the nut 512, the metal washer 102 of the floating seal washer 100 is pressed between the nut 512 and aircraft structure and the seal 114 extends from the aircraft structure into the cavity 516 and between the washer 102 and the bolt 502. Upon final installation, the seal 114 keeps the metal washer 102 of the floating seal washer 100 centered around the bolt 502 and prevents certain bolt features from improperly contacting the walls that form the cavity 516 of the nut 512.

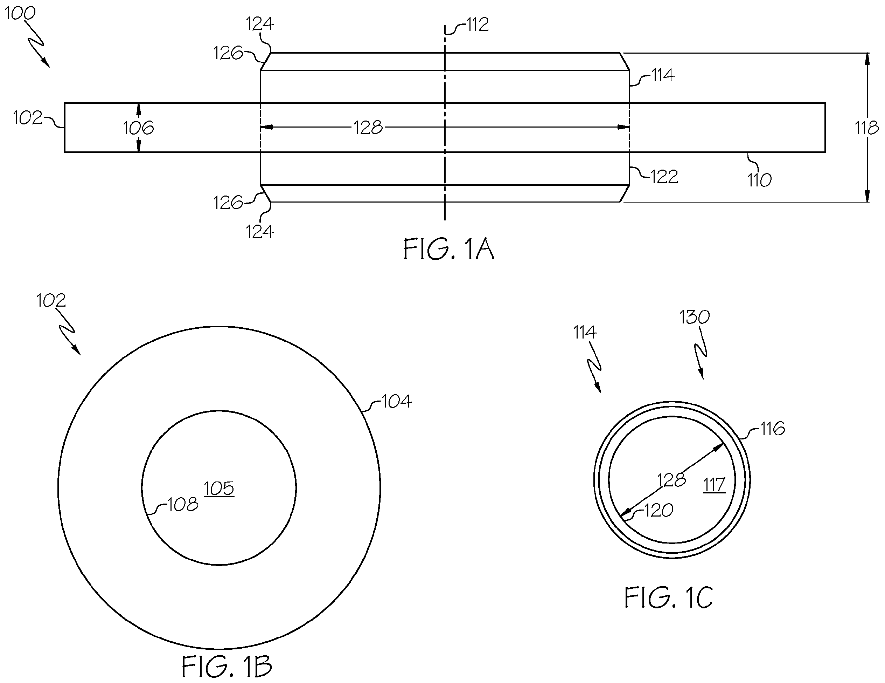

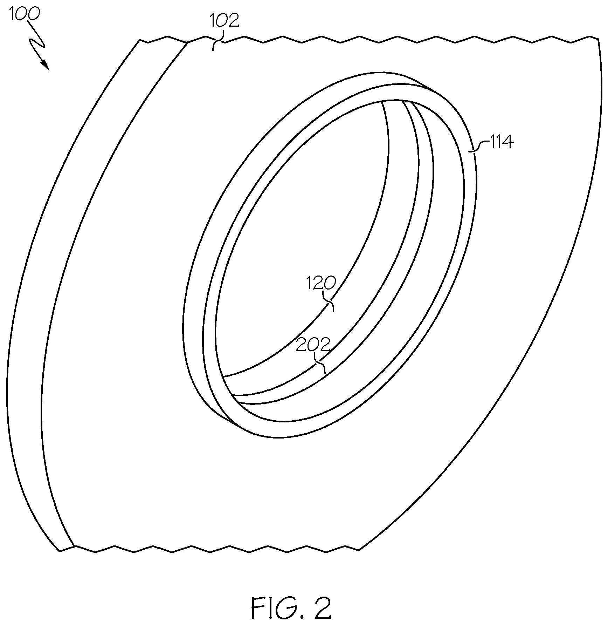

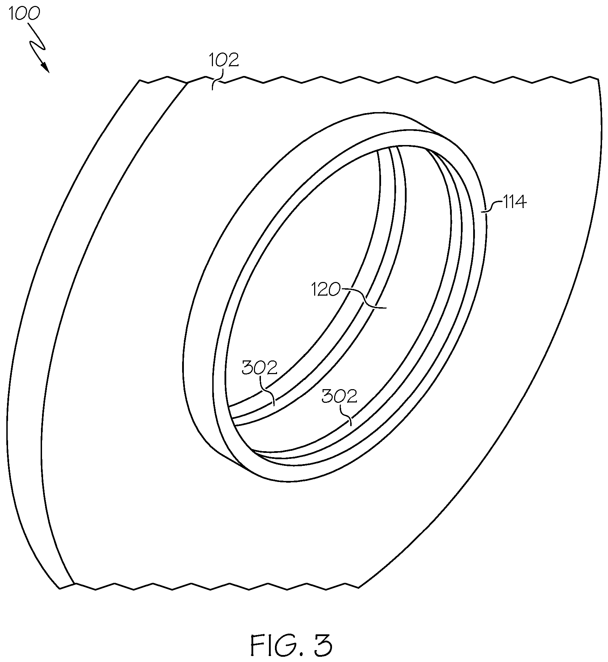

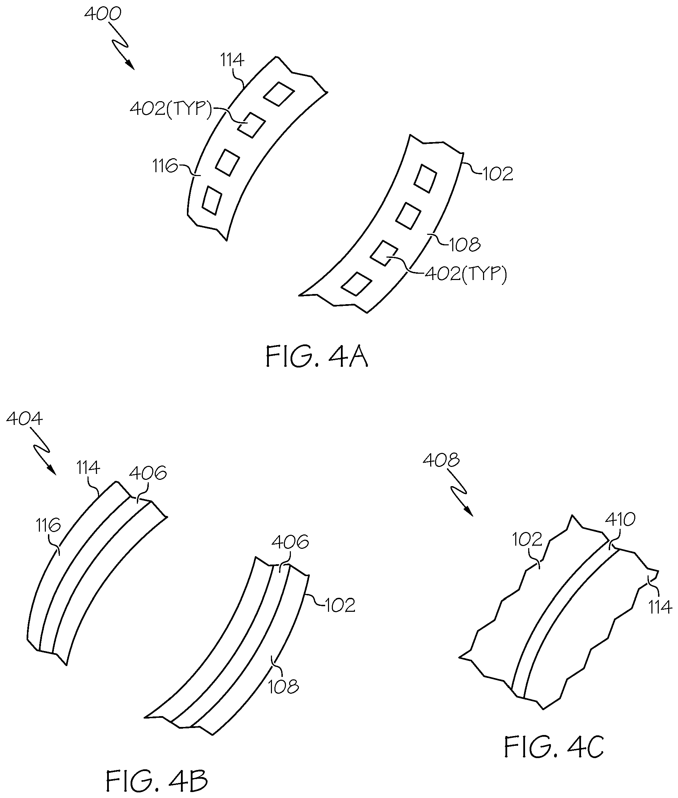

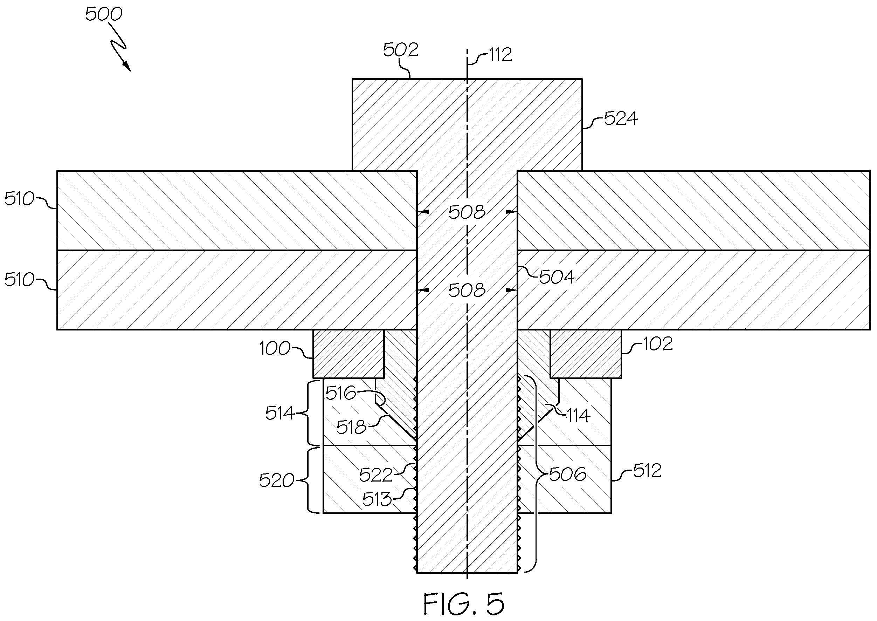

Referring generally to Figs. 1A-C, 2, 3, 4A-C and 5, by way of examples, the present disclosure is directed to a floating seal washer 100 for protection from electromagnetic effects. Fig. 1A shows a cross-sectional view of an example of the floating seal washer 100. Fig. 1B shows a top view of a washer 102 in the floating seal washer 100 of Fig. 1A. Fig. 1C shows a top view of a seal 114 in the floating seal washer 100 of Fig. 1A. Fig. 2 shows another example of the floating seal washer 100. Fig. 3 shows yet another example of the floating seal washer 100. Fig. 4A shows an example of a retention feature 400 of the floating seal washer 100. Fig. 4B shows an example of another retention feature 404 of the floating seal washer100. Fig. 4C shows an example of yet another retention feature 408 of the floating seal washer 100. Fig. 5 shows a cross-sectional side view of an example of a fastener assembly 500 for protection from electromagnetic effects.

With reference again to Figs. 1A-C, 2, 3, 4A-C and 5, in one or more examples, a floating seal washer 100 for protection from electromagnetic effects is disclosed. The floating seal washer 100 includes a washer 102 and a seal 114. The washer 102 has an annular shape 104 that includes a central opening 105. The annular shape 104 defines a height 106, an inside diameter 108 and an outside diameter 110 along a longitudinal axis 112. The seal 114 has a circular shape 116 that includes a central aperture 117. The circular shape 116 defines an elevation 118, an inner surface 120 and an outer surface 122 along the longitudinal axis 112. The seal 114 being set into the inside diameter 108 of the washer 102. The seal 114 and the washer 102 float relative to each other.

In another example of the floating seal washer 100, the electromagnetic effects include effects from lightning strikes. In yet another example of the floating seal washer 100, both edges 124 of the outer surface 122 of the seal 114 are chamfered 126. In still another example of the floating seal washer 100, the seal 114 is symmetrical in relation to a diameter 128 and the longitudinal axis 112. In still yet another example of the floating seal washer 100, the seal 114 includes an electromagnetic energy isolating seal 130. In another example of the floating seal washer 100, the seal 114 includes an annular groove 202 in the inner surface 120. In a further example, the annular groove 202 is centrally disposed in the inner surface 120 in relation to the longitudinal axis 112. In yet another example of the floating seal washer 100, the seal 114 includes two annular grooves 302 in the inner surface 120. In a further example, the two annular grooves 302 are spaced apart in relation to the longitudinal axis 112.

In still another example of the floating seal washer 100, the seal 114 includes a nonconductive material. In a further example, the nonconductive material includes a thermoplastic material, a polyether ether ketone material or any other suitable nonconductive material. In still yet another example of the floating seal washer 100, the washer 102 includes a metallic material. In a further example, the metallic material includes a corrosion-resistant steel, a stainless steel or any other suitable metallic material in any suitable combination. In another example, the floating seal washer 100 also includes a retention feature 400, 404, 408 to prevent the seal 114 from dislodging from the washer 102 prior to use of the floating seal washer 100 in a fastener assembly 500. In a further example, the retention feature 400, 404, 408 includes mating notches 402 in the washer 102 and the seal 114, one or more mating grooves 406 in the washer 102 and the seal 114, an interference fit between the washer 102 and the seal 114, an adhesive 410 between the washer 102 and the seal 114 or any other suitable retention feature in any suitable combination.

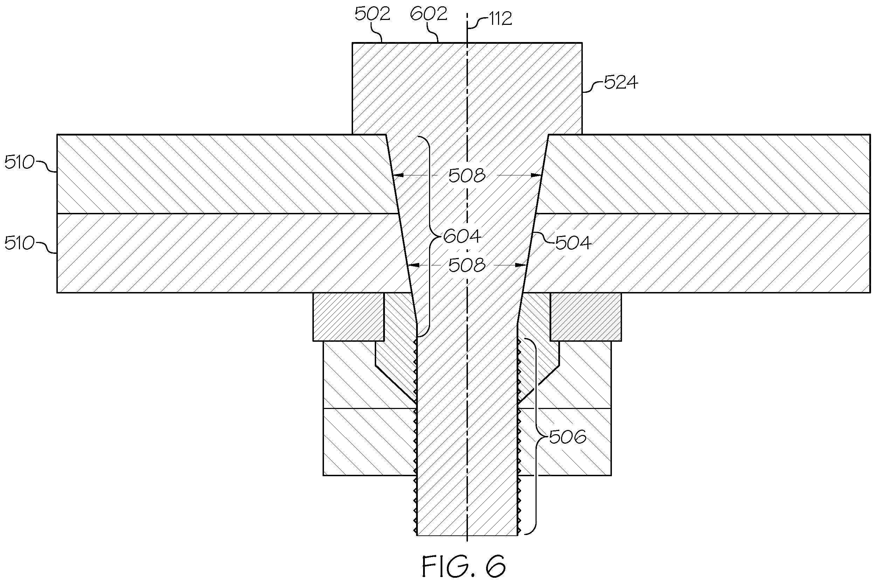

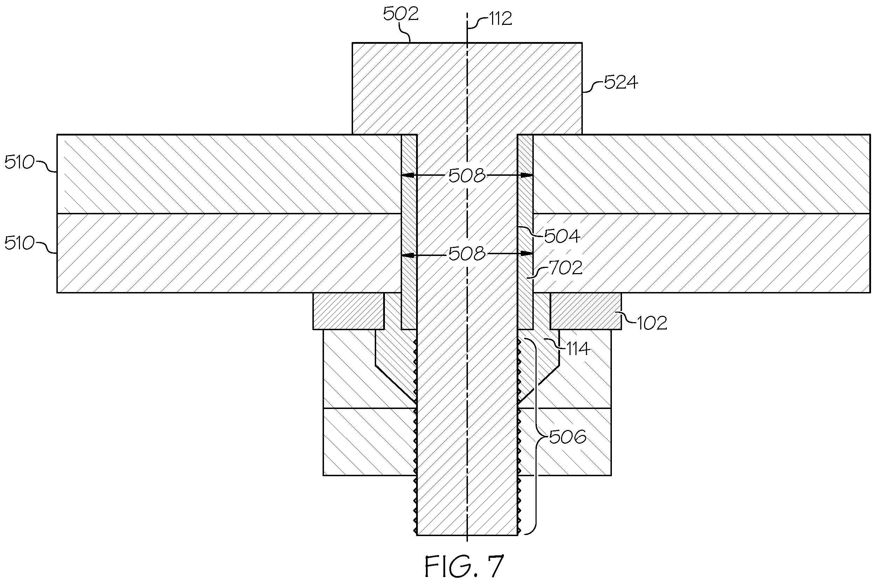

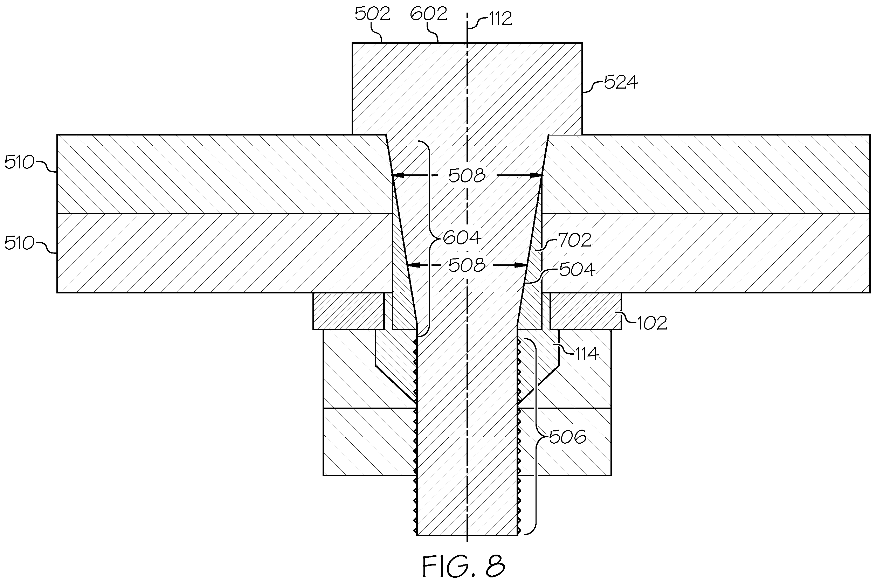

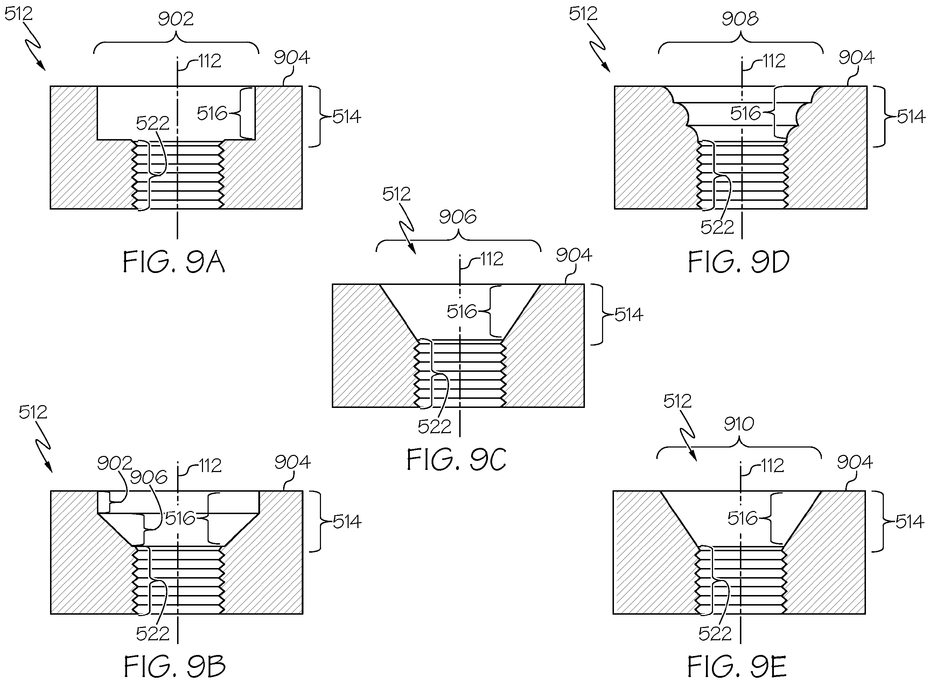

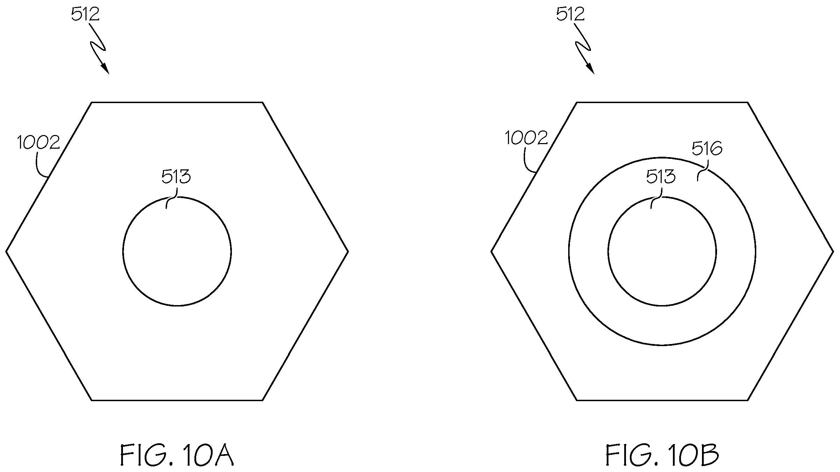

Referring generally to Figs. 1A-C, 2, 3, 4A-C, 5-8, 9A-E and 10A-B, by way of examples, the present disclosure is directed to a fastener assembly 500 for protection from electromagnetic effects. Fig. 1A shows a cross-sectional view of an example of a floating seal washer 100 for protection from electromagnetic effects. Fig. 1B shows a top view of a washer 102 in the floating seal washer 100 of Fig. 1A. Fig. 1C shows a top view of a seal 114 in the floating seal washer 100 of Fig. 1A. Fig. 2 shows another example of a floating seal washer 100. Fig. 3 shows yet another example of a floating seal washer 100. Fig. 4A shows an example of a retention feature 400 of the floating seal washer 100. Fig. 4B shows an example of another retention feature 404 of the floating seal washer100. Fig. 4C shows an example of yet another retention feature 408 of the floating seal washer 100. Fig. 5 shows a cross-sectional side view of an example of the fastener assembly 500. Fig. 6 shows another example of the fastener assembly 500. Fig. 7 shows yet another example of the fastener assembly 500. Fig. 8 shows still another example of the fastener assembly 500. Fig. 9A shows an example of a nut 512 of the fastener assembly 500. Fig. 9B shows another example of the nut 512. Fig. 9C shows yet another example of the nut 512. Fig. 9D shows still another example of the nut 512. Fig. 9E shows still yet another example of the nut 512. Fig. 10A shows a bottom view of the nuts 512 of Figs. 9A-E. Fig. 10B shows a top view of the nuts 512 of Figs. 9A-E.

With reference again to Figs. 1A-C, 2, 3, 4A-C, 5-8, 9A-E and 10A-B, in one or more examples, a fastener assembly 500 for protection from electromagnetic effects includes a bolt 502, a floating seal washer 100 and a nut 512. The bolt 502 includes a shank 504 defining a longitudinal axis 112 along its length and having a threaded portion 506. The bolt 502 configured to be inserted into bores 508 through at least two workpieces 510 to be joined. The floating seal washer 100 includes a washer 102 and a seal 114. The washer 102 has an annular shape 104 including a central opening 105. The annular shape 104 defines an inside diameter 108 along the longitudinal axis 112. The seal 114 being set into the inside diameter 108 of the washer 102. The floating seal washer 100 configured to be installed on the shank 504 from the threaded portion 506 and slid toward the at least two workpieces 510. The seal 114 and the washer 102 float relative to each other. The nut 512 has a through hole 513 along the longitudinal axis 112. The nut 512 includes a first portion 514 defining a cavity 516 formed by internal walls 518 and a second portion 520 with internal threads 522. The nut 512 configured for threaded engagement with the bolt 502 such that the cavity 516 faces the floating seal washer 100.

In another example of the fastener assembly 500, the electromagnetic effects include effects from lightning strikes. In yet another example of the fastener assembly 500, the bolt 502 includes a metallic material. In a further example, the metallic material includes a corrosion-resistant steel, a stainless steel, a nickel alloy, a titanium alloy or any other suitable metallic material in any suitable combination. In still another example of the fastener assembly 500, the at least two workpieces 510 include at least one fiber-reinforced composite workpiece.

In still yet another example of the fastener assembly 500, the bolt 502 includes a tapered bolt 602 with a head 524 opposing the threaded portion 506 of the shank 504. The shank 504 of the tapered bolt 602 includes a tapered portion 604 between the head 524 and the threaded portion 506. In a further example, the bores 508 through the at least two workpieces 510 are sized to receive the threaded portion 506 and the tapered portion 604 of the shank 504 for the tapered bolt 602. In an even further example, the bores 508 through the at least two workpieces 510 are configured to provide an interference fit to the tapered portion 604 of the shank 504 for the tapered bolt 602.

In another example of the fastener assembly 500, the nut 512 is configured to compress the floating seal washer 100 between the at least two workpieces 510 and the nut 512 upon further threaded engagement such that the washer 102 is spaced from the shank 504 of the bolt 502 by the seal 114 and such that the seal 114 prevents the shank 504 from contacting the internal walls 518 of the nut 512 that define the cavity 516. In a further example, the seal 114 is configured to provide a barrier to electromagnetic effects between the shank 504 of the bolt 502 and the washer 102 of the floating seal washer 100 after the nut 512 is fully engaged with the threaded portion 506 of the shank 504. In another further example, the seal 114 is configured to provide a barrier to electromagnetic effects between the shank 504 of the bolt 502 and the internal walls 518 of the nut 512 that define the cavity 516 after the nut 512 is fully engaged with the threaded portion 506 of the shank 504.

In yet another example of the fastener assembly 500, the bolt 502 includes a head 524 opposing the threaded portion 506 of the shank 504 and a sleeve 702 installed on the shank 504 from the threaded portion 506 and slid toward the head 524. In a further example, the bores 508 through the at least two workpieces 510 are sized to receive the sleeve 702 and the shank 504 of the bolt 502. In an even further example, the bores 508 through the at least two workpieces 510 are configured to provide an interference fit to the sleeve 702. In another further example, the sleeve 702 includes a metallic material. In an even further example, the metallic material includes a stainless steel, a corrosion-resistant steel or any other suitable metallic material in any suitable combination. In yet another further example, the seal 114 of the floating seal washer 100 is configured to prevent the sleeve 702 of the bolt 502 from contacting the nut 512 after the nut 512 is fully engaged with the threaded portion 506 of the shank 504. In an even further example, the seal 114 of the floating seal washer 100 is configured to provide a barrier to electromagnetic effects between the sleeve 702 of the bolt 502 and the nut 512 after the nut 512 is fully engaged with the threaded portion 506 of the shank 504.

In still another example of the fastener assembly 500, the annular shape 104 of the washer 102 also defines a height 106 and an outside diameter 110 along the longitudinal axis 112. In this example, the seal 114 has a circular shape 116 that includes a central aperture 117. The circular shape 116 defines an elevation 118, an inner surface 120 and an outer surface 122 along the longitudinal axis 112. In a further example, both edges 124 of the outer surface 122 of the seal 114 in the floating seal washer 100 are chamfered 126. In another further example, the seal 114 of the floating seal washer 100 includes an annular groove 202 in the inner surface 120. In yet another further example, the seal 114 of the floating seal washer 100 includes two annular grooves 302 in the inner surface 120.

In still yet another example of the fastener assembly 500, the seal 114 of the floating seal washer 100 is symmetrical in relation to a diameter 128 and the longitudinal axis 112. In another example of the fastener assembly 500, the seal 114 of the floating seal washer 100 includes an electromagnetic energy isolating seal 130. In yet another example of the fastener assembly 500, the seal 114 of the floating seal washer 100 includes a nonconductive material. In still another example of the fastener assembly 500, the washer 102 of the floating seal washer 100 comprises a metallic material. In still yet another example of the fastener assembly 500, the nut 512 includes a metallic material. In a further example, the metallic material includes a corrosion-resistant steel, a stainless steel or any other suitable metallic material in any suitable combination.

In another example of the fastener assembly 500, the cavity 516 includes a counterbore 902 extending from an exterior surface 904 on the first portion 514 of the nut 512 along the longitudinal axis 112 toward the internal threads 522. In a further example, the cavity 516 includes a countersink 906 extending from the counterbore 902 in the first portion 514 of the nut 512 along the longitudinal axis 112 toward the internal threads 522. In yet another example of the fastener assembly 500, the cavity 516 includes a countersink 906 extending from an exterior surface 904 on the first portion 514 of the nut 512 along the longitudinal axis 112 toward the internal threads 522. In still another example of the fastener assembly 500, the cavity 516 includes a contoured surface 908 extending from an exterior surface 904 on the first portion 514 of the nut 512 along the longitudinal axis 112 toward the internal threads 522. In still yet another example of the fastener assembly 500, the cavity 516 includes a machined surface 910 extending from an exterior surface 904 on the first portion 514 of the nut 512 along the longitudinal axis 112 toward the internal threads 522.

In another example of the fastener assembly 500, the nut 512 includes a torquing feature 1002 for engagement by a torquing tool in conjunction with engagement and tightening of the nut 512 on the threaded portion 506 of the shank 504.

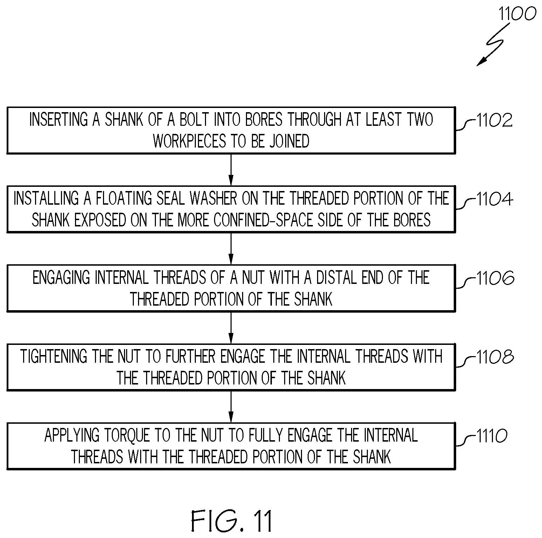

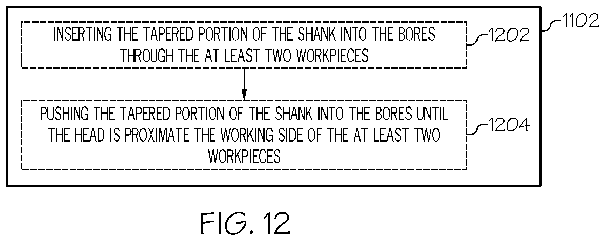

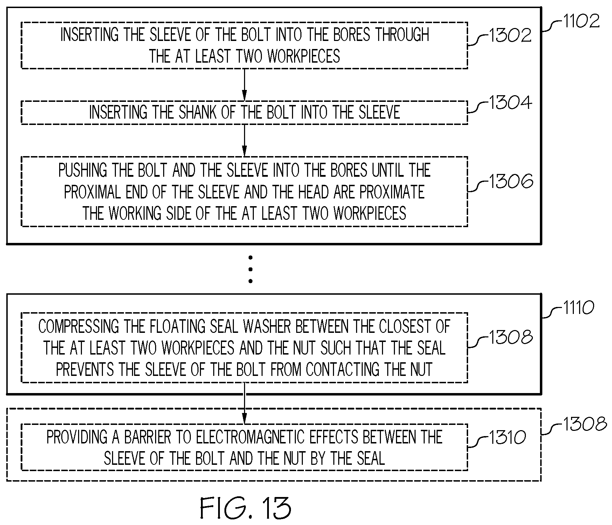

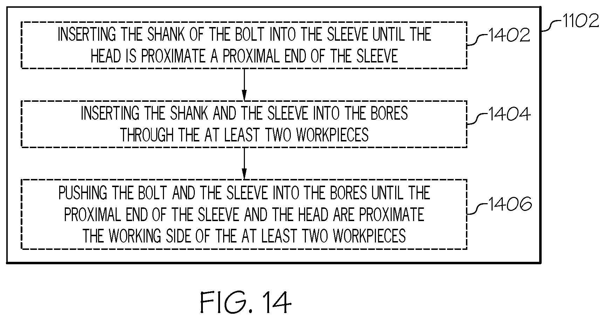

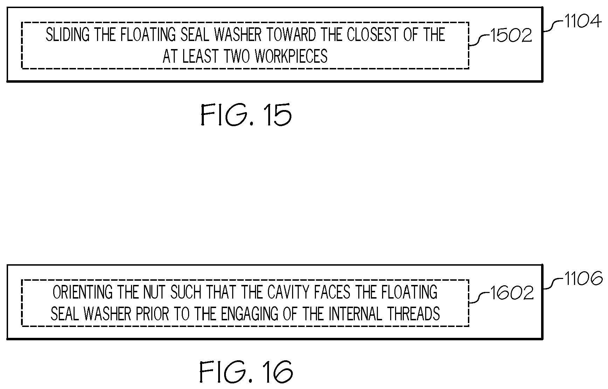

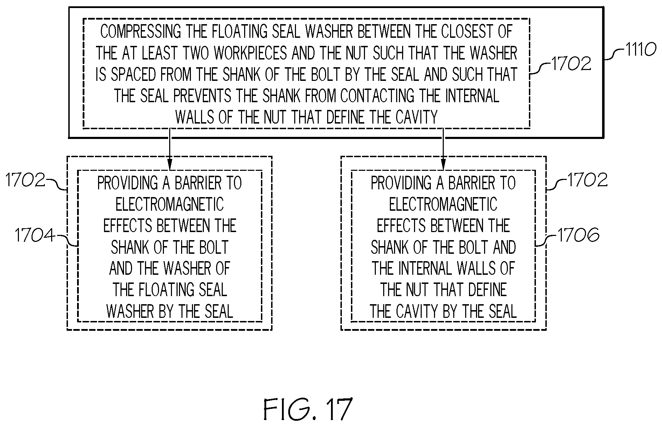

Referring generally to Figs. 1A-C, 3, 5-7, 10A-B and 11-17, by way of examples, the present disclosure is directed to a method 1100 for protection from electromagnetic effects. Fig. 1A shows a cross-sectional view of an example of a floating seal washer 100 for protection from electromagnetic effects. Fig. 1B shows a top view of a washer 102 in the floating seal washer 100 of Fig. 1A. Fig. 1C shows a top view of a seal 114 in the floating seal washer 100 of Fig. 1A. Fig. 3 shows another example of the floating seal washer 100. Fig. 5 shows a cross-sectional side view of an example of a fastener assembly 500 for protection from electromagnetic effects. Fig. 6 shows another example of the fastener assembly 500. Fig. 7 shows yet another example of the fastener assembly 500. Fig. 10A shows a bottom view of a nut 512 of the fastener assembly 500 shown in Fig. 5. Fig. 10B shows a top view of the nut 512 of the fastener assembly 500 shown in Fig. 5. Fig. 11 provides an example of the method 1100 for protection from electromagnetic effects. Fig. 12 provides an example of the inserting 1102 of the shank 504 of Fig. 11. Fig. 13 provides another example of the inserting 1102 of the shank 504 and several examples of the applying 1110 of the torque of Fig. 11. Fig. 14 provides yet another example of the inserting 1102 of the shank 504 of Fig. 11. Fig. 15 provides an example of the installing 1104 of the floating seal washer 100 of Fig. 11. Fig. 16 provides an example of the engaging 1106 of the internal threads 522 of Fig. 11. Fig. 17 provides several examples of the applying 1110 of the torque of Fig. 11.

With reference again to Figs. 1A-C, 5-7, 10A-B and 11, in one or more examples, a method 1100 (see Fig. 11) for protection from electromagnetic effects includes inserting 1102 a shank 504 of a bolt 502 into bores 508 through at least two workpieces 510 to be joined. The shank 504 defines a longitudinal axis 112 along its length and having a threaded portion 506. The shank 504 being inserted on a working side of the bores 508 until the threaded portion 506 is at least partially exposed on a more confined-space side of the bores 508. At 1104, a floating seal washer 100 is installed on the threaded portion 506 of the shank 504 exposed on the more confined-space side of the bores 508. The floating seal washer 100 includes a washer 102 and a seal 114. The washer 102 has an annular shape 104 that includes a central opening 105. The annular shape 104 defines an inside diameter 108 along the longitudinal axis 112. The seal 114 being set into the inside diameter 108 of the washer 102. The washer 102 and the seal 114 float relative to each other. At 1106, internal threads 522 of a nut 512 are engaged with a distal end of the threaded portion 506 of the shank 504. The nut 512 has a through hole 513 along the longitudinal axis 112. The nut 512 comprising a first portion 514 defining a cavity 516 formed by internal walls 518 and a second portion 520 with the internal threads 522. At 1108, the nut 512 is tightened to further engage the internal threads 522 with the threaded portion 506 of the shank 504. At 1110, torque is applied to the nut 512 to fully engage the internal threads 522 with the threaded portion 506 of the shank 504.

In another example of the method 1100, the bolt 502 includes a tapered bolt 602 with a head 524 opposing the threaded portion 506 of the shank 504. The shank 504 of the tapered bolt 602 includes a tapered portion 604 between the head 524 and the threaded portion 506.

With reference again to Figs. 5, 6, 11 and 12, in one or more additional examples of the method 1100, the bolt 502 includes a tapered bolt 602 with a head 524 opposing the threaded portion 506 of the shank 504. The shank 504 of the tapered bolt 602 includes a tapered portion 604 between the head 524 and the threaded portion 506. In this example, the inserting 1102 of the shank 504 includes inserting 1202 (see Fig. 12) the tapered portion 604 of the shank 504 into the bores 508 through the at least two workpieces 510. At 1204, the tapered portion 604 of the shank 504 is pushed into the bores 508 until the head 524 is proximate the working side of the at least two workpieces 510.

With reference again to Figs. 5, 6, 11 and 13, in yet one or more additional examples of the method 1100, the bolt 502 includes a head 524 opposing the threaded portion 506 of the shank 504 and a sleeve 702 configured for installation on the shank 504 from the threaded portion 506. In this example, the inserting 1102 of the shank 504 includes inserting 1302 (see Fig. 13) the sleeve 702 of the bolt 502 into the bores 508 through the at least two workpieces 510. At 1304, the shank 504 of the bolt 502 is inserted into the sleeve 702. At 1306, the bolt 502 and the sleeve 702 are pushed into the bores 508 until a proximal end of the sleeve 702 and the head 524 are proximate the working side of the at least two workpieces 510. In another example of the method 1100, the applying 1110 of the torque includes compressing 1308 (see Fig. 13) the floating seal washer 100 between the closest of the at least two workpieces 510 and the nut 512 such that the seal 114 prevents the sleeve 702 of the bolt 502 from contacting the nut 512. In yet another example of the method 1100, the compressing 1308 of the floating seal washer 100 includes providing 1310 a barrier to electromagnetic effects between the sleeve 702 of the bolt 502 and the nut 512 by the seal 114.

With reference again to Figs. 5, 6, 11 and 14, in yet one or more additional examples of the method 1100, the bolt 502 includes a head 524 opposing the threaded portion 506 of the shank 504 and a sleeve 702 configured for installation on the shank 504 from the threaded portion 506. In this example, the inserting 1102 of the shank 504 includes inserting 1402 (see Fig. 14) the shank 504 of the bolt 502 into the sleeve 702 until the head 524 is proximate a proximal end of the sleeve 702. At 1404, the shank 504 and the sleeve 702 are inserted into the bores 508 through the at least two workpieces 510. At 1406, the bolt 502 and the sleeve 702 are pushed into the bores 508 until the proximal end of the sleeve 702 and the head 524 are proximate the working side of the at least two workpieces 510.

With reference again to Figs. 1A-C, 3, 5 and 11, in one or more additional examples of the method 1100, the seal 114 of the floating seal washer 100 is symmetrical in relation to a diameter 128 and the longitudinal axis 112 such that either side of the floating seal washer 100 can be facing the more confined-space side of the bores 508 through at least two workpieces 510 in conjunction with the installing 1104 of the floating seal washer 100. In another example of the method 1100, the seal 114 of the floating seal washer 100 includes an annular groove 202 in an inner surface 120 to provide flexibility for the seal 114 in conjunction with movement of the washer 102 and the seal 114 relative to each other during the tightening 1108 of the nut 512 and the applying 1110 of the torque. In yet another example of the method 1100, the seal 114 of the floating seal washer 100 includes two annular grooves 302 in an inner surface 120 to provide flexibility for the seal 114 in conjunction with movement of the washer 102 and the seal 114 relative to each other during the tightening 1108 of the nut 512 and the applying 1110 of the torque.

With reference again to Figs. 1A-C, 11 and 15, in yet one or more additional examples of the method 1100, the installing 1104 of the floating seal washer 100 includes sliding 1502 (see Fig. 15) the floating seal washer 100 toward the closest of the at least two workpieces 510.

With reference again to Figs. 5, 10A-B, 11 and 16, in yet one or more additional examples of the method 1100, the engaging 1106 of the internal threads 522 of the nut 512 includes orienting 1602 (see Fig. 16) the nut 512 such that the cavity 516 faces the floating seal washer 100 prior to the engaging 1106 of the internal threads 522. In another example of the method 1100, the nut 512 includes a torquing feature 1002 for engagement by a torquing tool in conjunction with the tightening 1108 of the nut 512 and the applying 1110 of the torque.

With reference again to Figs. 1A-C, 5, 11 and 17, in yet one or more additional examples of the method 1100, the applying 1110 of the torque includes compressing 1702 (see Fig. 17) the floating seal washer 100 between the closest of the at least two workpieces 510 and the nut 512 such that the washer 102 is spaced from the shank 504 of the bolt 502 by the seal 114 and such that the seal 114 prevents the shank 504 from contacting the internal walls 518 of the nut 512 that define the cavity 516. In another example of the method 1100, the compressing 1702 of the floating seal washer 100 includes providing 1704 a barrier to electromagnetic effects between the shank 504 of the bolt 502 and the washer 102 of the floating seal washer 100 by the seal 114. In yet another example of the method 1100, the compressing 1702 of the floating seal washer 100 includes providing 1706 a barrier to electromagnetic effects between the shank 504 of the bolt 502 and the internal walls 518 of the nut 512 that define the cavity 516 by the seal 114.

Examples of floating seal washers 100, fastener assemblies 500 and methods 1100 for protection from electromagnetic effects may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1A-C, 2, 3, 4A-C, 5-8, 9A-E and 10A-B, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1A-C, 2, 3, 4A-C, 5-8, 9A-E and 10A-B, referred to above, need be included in every example and not all elements, features and/or components described herein are necessarily depicted in each illustrative example. Accordingly, some of the elements, features and/or components described and illustrated in Figs. 1A-C, 2, 3, 4A-C, 5-8, 9A-E and 10A-B may be combined in various ways without the need to include other features described and illustrated in Figs. 1A-C, 2, 3, 4A-C, 5-8, 9A-E and 10A-B, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. Figs. 1A-C, 2, 3, 4A-C, 5-8, 9A-E and 10A-B, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1A-C, 2, 3, 4A-C, 5-8, 9A-E and 10A-B and such elements, features and/or components may not be discussed in detail herein with reference to each of Figs. 1A-C, 2, 3, 4A-C, 5-8, 9A-E and 10A-B. Similarly, all elements, features and/or components may not be labeled in each of Figs. 1A-C, 2, 3, 4A-C, 5-8, 9A-E and 10A-B, but reference numerals associated therewith may be utilized herein for consistency.

In Figs. 11-17, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 11-17 and the accompanying disclosure describing the operations of the disclosed methods 1100 set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

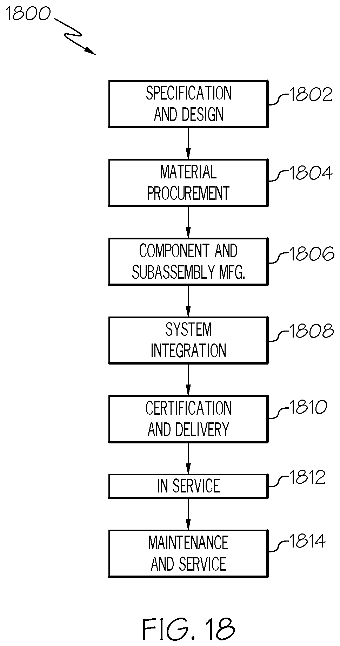

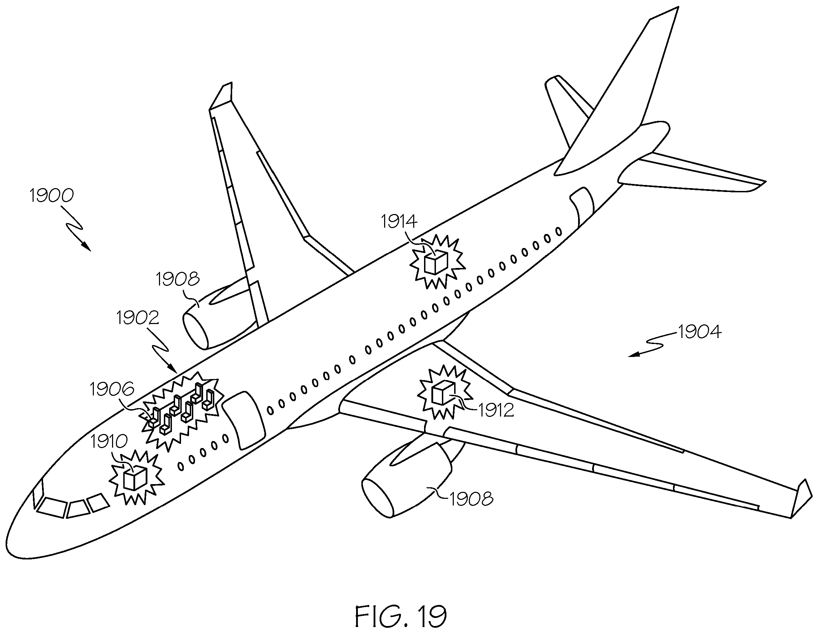

Examples of the subject matter disclosed herein may be described in the context of aircraft manufacturing and service method 1800 as shown in Fig. 18 and aircraft 1900 as shown in Fig. 19. In one or more examples, the disclosed floating seal washers 100, fastener assemblies 500 and methods 1100 for protection from electromagnetic effects may be used in aircraft manufacturing. During pre-production, the service method 1800 may include specification and design (block 1802) of aircraft 1900 and material procurement (block 1804). During production, component and subassembly manufacturing (block 1806) and system integration (block 1808) of aircraft 1900 may take place. Thereafter, aircraft 1900 may go through certification and delivery (block 1810) to be placed in service (block 1812). While in service, aircraft 1900 may be scheduled for routine maintenance and service (block 1814). Routine maintenance and service may include modification, reconfiguration, refurbishment, etc. of one or more systems of aircraft 1900.

Each of the processes of the service method 1800 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 19, aircraft 1900 produced by the service method 1800 may include airframe 1902 with a plurality of high-level systems 1904 and interior 1906. Examples of high-level systems 1904 include one or more of propulsion system 1908, electrical system 1910, hydraulic system 1912 and environmental system 1914. Any number of other systems may be included. Although an aerospace example is shown, the principles disclosed herein may be applied to other industries, such as the automotive industry. Accordingly, in addition to aircraft 1900, the principles disclosed herein may apply to other vehicles, e.g., land vehicles, marine vehicles, space vehicles, etc.

The disclosed floating seal washers 100, fastener assemblies 500 and methods 1100 for protection from electromagnetic effects may be employed during any one or more of the stages of the manufacturing and service method 1800. For example, components or subassemblies corresponding to component and subassembly manufacturing (block 1806) may be fabricated or manufactured in a manner similar to components or subassemblies produced while aircraft 1900 is in service (block 1812). Also, one or more examples of the system(s), method(s), or combination thereof may be utilized during production stages (block 1806 and block 1808), for example, by substantially expediting assembly of or reducing the cost of aircraft 1900. Similarly, one or more examples of the system or method realizations, or a combination thereof, may be utilized, for example and without limitation, while aircraft 1900 is in service (block 1812) and/or during maintenance and service (block 1814).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the floating seal washers 100, fastener assemblies 500 and methods 1100 for protection from electromagnetic effects have been shown and described, modifications may occur to those skilled in the art upon reading the specification. The present application includes such modifications and is limited only by the scope of the claims.

The disclosure also comprises the following clauses:
1. A floating seal washer for protection from electromagnetic effects, comprising:
   a washer having an annular shape that defines a height, an inside diameter and an outside diameter along a longitudinal axis; and
   a seal having a circular shape comprising a central aperture, the circular shape defines an elevation, an inner surface and an outer surface along the longitudinal axis, the seal being set into the inside diameter of the washer, wherein the seal and the washer float relative to each other.
2. The floating seal washer of Clause 1, wherein the electromagnetic effects comprise effects from lightning strikes.
3. The floating seal washer of Clause 1 or 2, wherein both edges of the outer surface of the seal are chamfered.
4. The floating seal washer of any one of the preceding Clauses, wherein the seal is symmetrical in relation to a diameter and the longitudinal axis.
5. The floating seal washer of any one of the preceding Clauses, wherein the seal comprises an electromagnetic energy isolating seal.
6. The floating seal washer of any one of the preceding Clauses, wherein the seal comprises an annular groove in the inner surface.
7. The floating seal washer of Clause 6, wherein the annular groove is centrally disposed in the inner surface in relation to the longitudinal axis.
8. The floating seal washer of any one of the preceding Clauses, wherein the seal comprises two annular grooves in the inner surface.
9. The floating seal washer of Clause 8, wherein the two annular grooves are spaced apart in relation to the longitudinal axis.
10. The floating seal washer of any one of the preceding Clauses, wherein the seal comprises a nonconductive material.
11. The floating seal washer of Clause 10, wherein the nonconductive material comprises at least one of a thermoplastic material and a polyether ether ketone material.
12. The floating seal washer of any one of the preceding Clauses, wherein the washer comprises a metallic material.
13. The floating seal washer of Clause 12, wherein the metallic material comprises at least one of a corrosion-resistant steel and a stainless steel.
14. The floating seal washer of any one of the preceding Clauses, further comprising:
   a retention feature to prevent the seal from dislodging from the washer prior to use of the floating seal washer in a fastener assembly.
15. The floating seal washer of Clause 14, wherein the retention feature comprises at least one of mating notches in the washer and the seal, one or more mating grooves in the washer and the seal, an interference fit between the washer and the seal and an adhesive between the washer and the seal.
16. A fastener assembly for protection from electromagnetic effects, comprising:
   a bolt comprising a shank defining a longitudinal axis along its length and having a threaded portion, the bolt configured to be inserted into bores through at least two workpieces to be joined;
   a floating seal washer comprising a washer and a seal, the washer having an annular shape comprising a central opening, the annular shape defines an inside diameter along the longitudinal axis, the seal being set into the inside diameter of the washer, the floating seal washer configured to be installed on the shank from the threaded portion and slid toward the at least two workpieces, wherein the seal and the washer float relative to each other; and
   a nut having a through hole along the longitudinal axis, the nut comprising a first portion defining a cavity formed by internal walls and a second portion with internal threads, the nut configured for threaded engagement with the bolt such that the cavity faces the floating seal washer.
17. The fastener assembly of Clause 16, wherein the electromagnetic effects comprise effects from lightning strikes.
18. The fastener assembly of Clause 16 or 17, wherein the bolt comprises a metallic material.
19. The fastener assembly of Clause 18, wherein the metallic material comprises at least one of a corrosion-resistant steel, a stainless steel, a nickel alloy and a titanium alloy.
20. The fastener assembly of any one of Clauses 16-19, wherein the at least two workpieces comprise at least one fiber-reinforced composite workpiece.
21. The fastener assembly of any one of Clauses 16-20, wherein the bolt comprises a tapered bolt with a head opposing the threaded portion of the shank, the shank of the tapered bolt comprising a tapered portion between the head and the threaded portion.
22. The fastener assembly of Clause 21, wherein the bores through the at least two workpieces are sized to receive the threaded portion and the tapered portion of the shank for the tapered bolt.
23. The fastener assembly of Clause 22, wherein the bores through the at least two workpieces are configured to provide an interference fit to the tapered portion of the shank for the tapered bolt.
24. The fastener assembly of any one of Clauses 16-23, wherein the nut is configured to compress the floating seal washer between the at least two workpieces and the nut upon further threaded engagement such that the washer is spaced from the shank of the bolt by the seal and such that the seal prevents the shank from contacting the internal walls of the nut that define the cavity.
25. The fastener assembly of Clause 24, wherein the seal is configured to provide a barrier to electromagnetic effects between the shank of the bolt and the washer of the floating seal washer after the nut is fully engaged with the threaded portion of the shank.
26. The fastener assembly of Clause 24 or 25, wherein the seal is configured to provide a barrier to electromagnetic effects between the shank of the bolt and the internal walls of the nut that define the cavity after the nut is fully engaged with the threaded portion of the shank.
27. The fastener assembly of any one of Clauses 16-26, wherein the bolt comprises a head opposing the threaded portion of the shank and a sleeve installed on the shank from the threaded portion and slid toward the head.
28. The fastener assembly of Clause 27, wherein the bores through the at least two workpieces are sized to receive the sleeve and the shank of the bolt.
29. The fastener assembly of Clause 28, wherein the bores through the at least two workpieces are configured to provide an interference fit to the sleeve.
30. The fastener assembly of any one of Clauses 27-29, wherein the sleeve comprises a metallic material.
31. The fastener assembly of Clause 30, wherein the metallic material comprises at least one of a stainless steel and a corrosion-resistant steel.
32. The fastener assembly of any one of Clauses 27-31, wherein the seal of the floating seal washer is configured to prevent the sleeve of the bolt from contacting the nut after the nut is fully engaged with the threaded portion of the shank.
33. The fastener assembly of Clause 32, wherein the seal of the floating seal washer is configured to provide a barrier to electromagnetic effects between the sleeve of the bolt and the nut after the nut is fully engaged with the threaded portion of the shank.
34. The fastener assembly of any one of Clauses 16-33, wherein the annular shape of the washer also defines a height and an outside diameter along the longitudinal axis, and
   wherein the seal has a circular shape comprising a central aperture, the circular shape defines an elevation, an inner surface and an outer surface along the longitudinal axis.
35. The fastener assembly of Clause 34, wherein both edges of the outer surface of the seal in the floating seal washer are chamfered.
36. The fastener assembly of Clause 34 or 35, wherein the seal of the floating seal washer comprises an annular groove in the inner surface.
37. The fastener assembly of any one of Clauses 34-36, wherein the seal of the floating seal washer comprises two annular grooves in the inner surface.
38. The fastener assembly of any one of Clauses 16-37, wherein the seal of the floating seal washer is symmetrical in relation to a diameter and the longitudinal axis.
39. The fastener assembly of any one of Clauses 16-38, wherein the seal of the floating seal washer comprises an electromagnetic energy isolating seal.
40. The fastener assembly of any one of Clauses 16-39, wherein the seal of the floating seal washer comprises a nonconductive material.
41. The fastener assembly of any one of Clauses 16-40, wherein the washer of the floating seal washer comprises a metallic material.
42. The fastener assembly of any one of Clauses 16-41, wherein the nut comprises a metallic material.
43. The fastener assembly of Clause 42, wherein the metallic material comprises at least one of a corrosion-resistant steel and a stainless steel.
44. The fastener assembly of any one of Clauses 16-43, wherein the cavity comprises a counterbore extending from an exterior surface on the first portion of the nut along the longitudinal axis toward the internal threads.
45. The fastener assembly of Clause 44, wherein the cavity comprises a countersink extending from the counterbore in the first portion of the nut along the longitudinal axis toward the internal threads.
46. The fastener assembly of any one of Clauses 16-45, wherein the cavity comprises a countersink extending from an exterior surface on the first portion of the nut along the longitudinal axis toward the internal threads.
47. The fastener assembly of any one of Clauses 16-46, wherein the cavity comprises a contoured surface extending from an exterior surface on the first portion of the nut along the longitudinal axis toward the internal threads.
48. The fastener assembly of any one of Clauses 16-47, wherein the cavity comprises a machined surface extending from an exterior surface on the first portion of the nut along the longitudinal axis toward the internal threads.
49. The fastener assembly of any one of Clauses 16-48, wherein the nut comprises a torquing feature for engagement by a torquing tool in conjunction with engagement and tightening of the nut on the threaded portion of the shank.
50. A method for protection from electromagnetic effects, comprising:
   inserting a shank of a bolt into bores through at least two workpieces to be joined, the shank defining a longitudinal axis along its length and having a threaded portion, the shank being inserted on a working side of the bores until the threaded portion is at least partially exposed on a more confined-space side of the bores;
   installing a floating seal washer on the threaded portion of the shank exposed on the more confined-space side of the bores, the floating seal washer comprising a washer and a seal, the washer having an annular shape comprising a central opening, the annular shape defining an inside diameter along the longitudinal axis, the seal set into the inside diameter of the washer, wherein the washer and the seal float relative to each other;
   engaging internal threads of a nut with a distal end of the threaded portion of the shank, the nut having a through hole along the longitudinal axis, the nut comprising a first portion defining a cavity formed by internal walls and a second portion with the internal threads;
   tightening the nut to further engage the internal threads with the threaded portion of the shank; and
   applying torque to the nut to fully engage the internal threads with the threaded portion of the shank.
51. The method of Clause 50, wherein the bolt comprises a tapered bolt with a head opposing the threaded portion of the shank, the shank of the tapered bolt comprising a tapered portion between the head and the threaded portion.
52. The method of Clause 50 or 51, wherein the bolt comprises a tapered bolt with a head opposing the threaded portion of the shank, the shank of the tapered bolt comprising a tapered portion between the head and the threaded portion, the inserting of the shank comprising:
   inserting the tapered portion of the shank into the bores through the at least two workpieces; and
   pushing the tapered portion of the shank into the bores until the head is proximate the working side of the at least two workpieces.
53. The method of any one of Clauses 50-52, wherein the bolt comprises a head opposing the threaded portion of the shank and a sleeve configured for installation on the shank from the threaded portion, the inserting of the shank comprising:
   inserting the sleeve of the bolt into the bores through the at least two workpieces;
   inserting the shank of the bolt into the sleeve; and
   pushing the bolt and the sleeve into the bores until a proximal end of the sleeve and the head are proximate the working side of the at least two workpieces.
54. The method of Clause 53, the applying of the torque comprising:
   compressing the floating seal washer between a closest of the at least two workpieces and the nut such that the seal prevents the sleeve of the bolt from contacting the nut.
55. The method of Clause 54, the compressing of the floating seal washer comprising:
   providing a barrier to electromagnetic effects between the sleeve of the bolt and the nut by the seal.
56. The method of any one of Clauses 50-55, wherein the bolt comprises a head opposing the threaded portion of the shank and a sleeve configured for installation on the shank from the threaded portion, the inserting of the shank comprising:
   inserting the shank of the bolt into the sleeve until the head is proximate a proximal end of the sleeve;
   inserting the shank and the sleeve into the bores through the at least two workpieces; and
   pushing the bolt and the sleeve into the bores until the proximal end of the sleeve and the head are proximate the working side of the at least two workpieces.
57. The method of any one of Clauses 50-56, wherein the seal of the floating seal washer is symmetrical in relation to a diameter and the longitudinal axis such that either side of the floating seal washer can be facing the more confined-space side of the bores through at least two workpieces in conjunction with the installing of the floating seal washer.
58. The method of any one of Clauses 50-57, wherein the seal of the floating seal washer comprises an annular groove in an inner surface to provide flexibility for the seal in conjunction with movement of the washer and the seal relative to each other during the tightening of the nut and the applying of the torque.
59. The method of any one of Clauses 50-58, wherein the seal of the floating seal washer comprises two annular grooves in an inner surface to provide flexibility for the seal in conjunction with movement of the washer and the seal relative to each other during the tightening of the nut and the applying of the torque.
60. The method of any one of Clauses 50-59, the installing of the floating seal washer comprising:
   sliding the floating seal washer toward a closest of the at least two workpieces.
61. The method of any one of Clauses 50-60, the engaging of the internal threads of the nut comprising:
   orienting the nut such that the cavity faces the floating seal washer prior to the engaging of the internal threads.
62. The method of any one of Clauses 50-61, wherein the nut comprises a torquing feature for engagement by a torquing tool in conjunction with the tightening of the nut and the applying of the torque.
63. The method of any one of Clauses 50-62, the applying of the torque comprising:
   compressing the floating seal washer between a closest of the at least two workpieces and the nut such that the washer is spaced from the shank of the bolt by the seal and such that the seal prevents the shank from contacting the internal walls of the nut that define the cavity.
64. The method of Clause 63, the compressing of the floating seal washer comprising:
   providing a barrier to electromagnetic effects between the shank of the bolt and the washer of the floating seal washer by the seal.
65. The method of Clause 63 or 64, the compressing of the floating seal washer comprising:
   providing a barrier to electromagnetic effects between the shank of the bolt and the internal walls of the nut that define the cavity by the seal.

## Claims

1. A floating seal washer (100) for protection from electromagnetic effects, comprising:
a washer (102) having an annular shape (104) that defines a height (106), an inside diameter (108) and an outside diameter (110) along a longitudinal axis (112); and
a seal (114) having a circular shape (116) comprising a central aperture (117), the circular shape (116) defines an elevation (118), an inner surface (120) and an outer surface (122) along the longitudinal axis (112), the seal (114) being set into the inside diameter (108) of the washer (102), wherein the seal (114) and the washer (102) float relative to each other.

2. The floating seal washer of Claim 1, wherein the electromagnetic effects comprise effects from lightning strikes.

3. The floating seal washer of Claim 1 or 2, wherein both edges (124) of the outer surface (122) of the seal (114) are chamfered (126).

4. The floating seal washer of any one of the preceding Claims, wherein:
the seal (114) is symmetrical in relation to a diameter (128) and the longitudinal axis (112); and/or
the seal (114) comprises an electromagnetic energy isolating seal (130).

5. The floating seal washer of any one of the preceding Claims, wherein the seal (114) comprises an annular groove (202) in the inner surface (120), preferably wherein the annular groove (202) is centrally disposed in the inner surface (120) in relation to the longitudinal axis (112).

6. The floating seal washer of any one of the preceding Claims, wherein the seal (114) comprises two annular grooves (302) in the inner surface (120), preferably wherein the two annular grooves (302) are spaced apart in relation to the longitudinal axis (112).

7. The floating seal washer of any one of the preceding Claims, wherein the seal (114) comprises a nonconductive material, preferably wherein the nonconductive material comprises at least one of a thermoplastic material and a polyether ether ketone material.

8. The floating seal washer of any one of the preceding Claims, wherein the washer (102) comprises a metallic material, preferably wherein the metallic material comprises at least one of a corrosion-resistant steel and a stainless steel.

9. The floating seal washer of any one of the preceding Claims, further comprising:
a retention feature (400, 404, 408) to prevent the seal (114) from dislodging from the washer (102) prior to use of the floating seal washer (100) in a fastener assembly (500).

10. The floating seal washer of Claim 9, wherein the retention feature (400, 404, 408) comprises at least one of mating notches (402) in the washer (102) and the seal (114), one or more mating grooves (406) in the washer (102) and the seal (114), an interference fit between the washer (102) and the seal (114) and an adhesive (410) between the washer (102) and the seal (114).

11. A fastener assembly (500) for protection from electromagnetic effects, comprising:
a bolt (502) comprising a shank (504) defining a longitudinal axis (112) along its length and having a threaded portion (506), the bolt (502) configured to be inserted into bores (508) through at least two workpieces (510) to be joined;
a floating seal washer (100) comprising a washer (102) and a seal (114), the washer (102) having an annular shape (104) comprising a central opening (105), the annular shape (104) defines an inside diameter (108) along the longitudinal axis (112), the seal (114) being set into the inside diameter (108) of the washer (102), the floating seal washer (100) configured to be installed on the shank (504) from the threaded portion (506) and slid toward the at leasttwo workpieces (510), wherein the seal (114) and the washer (102) float relative to each other; and
a nut (512) having a through hole (513) along the longitudinal axis (112), the nut (512) comprising a first portion (514) defining a cavity (516) formed by internal walls (518) and a second portion (520) with internal threads (522), the nut (512) configured for threaded engagement with the bolt (502) such that the cavity (516) faces the floating seal washer (100).

12. The fastener assembly of Claim 11, wherein the bolt (502) comprises a tapered bolt (602) with a head (524) opposing the threaded portion (506) of the shank (504), the shank (504) of the tapered bolt (602) comprising a tapered portion (604) between the head (524) and the threaded portion (506).

13. The fastener assembly of Claim 11 or 12, wherein the nut (512) is configured to compress the floating seal washer (100) between the at least two workpieces (510) and the nut (512) upon further threaded engagement such that the washer (102) is spaced from the shank (504) of the bolt (502) by the seal (114) and such that the seal (114) prevents the shank (504) from contacting the internal walls (518) of the nut (512) that define the cavity (516).

14. The fastener assembly of any one of Claims 11-13, wherein the bolt (502) comprises a head (524) opposing the threaded portion (506) of the shank (504) and a sleeve (702) installed on the shank (504) from the threaded portion (506) and slid toward the head (524).

15. A method (1100) for protection from electromagnetic effects, comprising:
inserting (1102) a shank (504) of a bolt (502) into bores (508) through at least two workpieces (510) to be joined, the shank (504) defining a longitudinal axis (112) along its length and having a threaded portion (506), the shank (504) being inserted on a working side of the bores (508) until the threaded portion (506) is at least partially exposed on a more confined-space side of the bores (508);
installing (1104) a floating seal washer (100) on the threaded portion (506) of the shank (504) exposed on the more confined-space side of the bores (508), the floating seal washer (100) comprising a washer (102) and a seal (114), the washer having an annular shape (104) comprising a central opening (105), the annular shape (104) defining an inside diameter (108) along the longitudinal axis (112), the seal (114) set into the inside diameter (108) of the washer (102), wherein the washer (102) and the seal (114) float relative to each other;
engaging (1106) internal threads (522) of a nut (512) with a distal end of the threaded portion (506) of the shank (504), the nut (512) having a through hole (513) along the longitudinal axis (112), the nut (512) comprising a first portion (514) defining a cavity (516) formed by internal walls (518) and a second portion (520) with the internal threads (522);
tightening (1108) the nut (512) to further engage the internal threads (522) with the threaded portion (506) of the shank (504); and
applying (1110) torque to the nut (512) to fully engage the internal threads (522) with the threaded portion (506) of the shank (504).
